(19) Europäisches Patentamt
European Patent Office
Office européen des brevets

(11) **EP 4 013 238 B1**

(12) **EUROPEAN PATENT SPECIFICATION**

(45) Date of publication and mention
of the grant of the patent:
**15.01.2025 Bulletin 2025/03**

(21) Application number: **20754768.8**

(22) Date of filing: **17.08.2020**

(51) International Patent Classification (IPC):
*A23L 19/00* (2016.01)    *A23L 3/015* (2006.01)
*A23L 33/00* (2016.01)

(52) Cooperative Patent Classification (CPC):
**A23L 3/015; A23L 3/02; A23L 19/09; A23L 33/40**

(86) International application number:
**PCT/EP2020/073013**

(87) International publication number:
**WO 2021/028597 (18.02.2021 Gazette 2021/07)**

(54) **METHOD OF PREPARING A FRUIT-CONTAINING PRODUCT**

VERFAHREN ZUR HERSTELLUNG EINES OBSTHALTIGEN PRODUKTS

PROCÉDÉ DE PRÉPARATION D'UN PRODUIT CONTENANT DES FRUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2019 EP 19191985**

(43) Date of publication of application:
**22.06.2022 Bulletin 2022/25**

(73) Proprietor: **N.V. Nutricia**
**2712 HM Zoetermeer (NL)**

(72) Inventor: **MAZURKIEWICZ, Bozena Anna**
**3584 CT Utrecht (NL)**

(74) Representative: **Nederlandsch Octrooibureau**
**P.O. Box 29720**
**2502 LS The Hague (NL)**

(56) References cited:
**WO-A1-2007/010271    WO-A1-2011/109077**
**WO-A1-2017/062598    GB-A- 2 428 365**

## Description

FIELD OF THE INVENTION

The present invention relates to the field of food preparation and food processing, particularly a method of preparing fruit-containing products such as baby foods and baby purees.

BACKGROUND OF THE INVENTION

Consumer's demand for minimally processed, high quality products has increased remarkably in the recent years. Market preferences have shifted towards fresh, healthy and ready-to-eat foods that are not only rich in flavour but also have organoleptic properties matching as closely as possible a fresh product. Prolonged shelf life, preferably without the use of preservatives and colourants, is also appreciated.

Fruit and vegetable purees are adequate products for feeding infants due to their consistency and nutritional value. In stores, fruit and vegetable purees for young infants are readily available. These purees are typically stored at ambient temperature and have a shelf life of several months. To enable such an extended shelf life at ambient temperature, the fruit and vegetable purees should be treated with a sterilization process that ensures microbiological safety. However, the use of high temperatures in thermal treatment often negatively affects the nutritional and sensorial proprieties of food products.

Food purees require different types of sterilization depending on the pH of the ingredients. For instance, the pH of fruits is typically more acidic than the pH of vegetables, which also determines the type of microflora present therein. Vegetable purees are typically sterilized at higher temperatures as compared to fruit purees since vegetable purees are less affected by the exposure to high temperatures. For fruit purees, it is important that the temperature during sterilization remains low since thermal processing will negatively affect the appearance, taste and colour thereof.

Currently, retort heating is widely used in the food industry to produce such products. Retort heating includes heating the food that is sealed in a container using steam or other heating methods. The holding times and high temperatures (110-135°C) in retort heating often have a negative impact on the nutritional value and the sensory as well as organoleptic aspects of the food in the container.

The use of high-pressure processing (HPP), also known as pascalization, in food industry was developed as an alternative to common thermal processes, such as pasteurization and sterilization, to produce a microbiologically safe product. In traditional HPP, food products are sealed and placed into a steel compartment containing a liquid (often water), after which pumps are used to create the necessary pressure. Pressure is increased at a certain rate until the target pressure is reached, kept for a specific amount of time and subsequently released at a specific rate. Typical pressures applied to foods range from 300 - 800 MPa. Although heat may also be applied during HPP, high-pressure processes are normally conducted at refrigerated temperatures. However, due to adiabatic heating, temperatures do naturally increase during a typical HPP treatment. The magnitude of the temperature increase is dependent on the target pressure and food composition. Taking water as an example, the temperature increase is of approximately 3°C per 100 MPa. Morales-de la Peña, Food and Bioprocess Technology, 2018, 11, 1211-1221, teaches a high pressure treatment of mango puree at 550 MPa at a temperature of 59 °C for 8 minutes that could be a feasible treatment to reduce enzymatic activity and preserve fresh-like quality attributes.

Although HPP may be effective for killing microorganisms in food products, spores of some bacteria are pressure-tolerant and normally resist to the HPP treatment. This is not acceptable for products designed for infants.

*A. acidoterrestris* is a non-pathogen, spore-forming spoilage bacterium typically present in fruit-containing products. Food spoilage caused by this bacterium is characterized by a bad taste/aroma, which renders food product unsuitable for consumption. A. *acidoterrestris* spores show extremely high thermal resistance depending on the type of food matrix, soluble solids content and pH. A. *acidoterrestris* D95 values (time in minutes during which the number of living cells decrease by 90%, at 95°C) typically range from 1.85 to 15.1 min, depending on the type of food. The standard pasteurization process using temperatures of 85-95°C for a period of time of about 40 minutes at ambient pressure, which is aimed at destroying vegetative pathogens, is therefore ineffective against spores of A. *acidoterrestris.*

HPTS (high pressure thermal sterilization) combines the effects of elevated temperatures (90 to 121 °C) and pressures above or equal to 600 MPa to achieve inactivation of bacterial spores. For HPTS treatment, the product needs to be preheated to 70 to 90 °C and, through compression heating during the pressure build-up, the process temperature can reach up to 130 °C. Sevenich et. al. (High-Pressure Thermal Sterilization: Food Safety and Food Quality of Baby Food Puree, Journal of Food Science, Vol. 79, Nr. 2, 2014) inoculated baby food puree with spores of *8. amyloliquefaciens* or G. *stearothermophilus* to a spore count of $10^5$ to $10^7$ and exposed them to a temperature range of 90-121°C at 600 MPa. The vegetable puree comprised: carrots 40%, peas 20%, zucchini 15%, water 24.9%, and 0.1% salt. The $A_w$-value of the puree was 0.96, the pH 6.47, and dry matter content 8%.

Silva et al. (Bacterial spore inactivation at 45-65°C using high pressure processing: Study of Alicyclobacillus acidoterrestris in orange juice, Food microbiology 32 (2012), 206-211) inoculated orange juice with spores from A. *acidoterrestris* to yield an initial count of ca.$10^6$ spores cfu/mL. The packaged orange juice samples (9.2 °Brix, pH=3.8) were submitted to simultaneous high pressure - mild temperature processes with pressures of 200 MPa and 600 MPa, temperatures of 45°C, 55°C and 65°C and processing times between 1 min and 15 min. The high-pressure processing conditions investigated (200 MPa, 600 MPa) resulted in a reduction in the microbial numbers, in particular at the higher temperature of 65 °C, where approximately 2 log reduction of A. *acidoterrestris* levels were registered after processing for 10 min. This reduction is not sufficient from an infant food safety point of view as there is still $10^3$-$10^4$ spores cfu/ml A. *acidoterrestris* remaining in the orange juice samples.

Ferrari et al. (The effects of high hydrostatic pressure on the polyphenols and anthocyanins in red fruit products, Procedia Food Science 1 (2011) 847-853) describes the preparation of a strawberry mousse. Fresh strawberries were washed twice, cut into small pieces, citric acid and saccharose were added as preservative and for acidity and °Brix correction respectively, and finely homogenized using an electric blender. The samples were stored under refrigerated conditions before the high-pressure experiments. In the high-pressure treatments, the processing conditions were set at 500 MPa, 50°C, 10 min for the strawberry mousse samples. At the end of the treatment, the samples were stored at 4°C.

It is an object of the present invention to provide a fruit-containing product for infants that is microbiologically safe, without the use of antimicrobial preservatives, and is suitable for storage at ambient temperatures, while at the same time maintaining a natural appearance, with an appealing colour and taste.

SUMMARY OF THE INVENTION

The inventors have surprisingly found that a fruit-containing product, selected from baby foods, fruit purees, fruit spreads, slurries, mousse/mousselines, compotes, creams and jams, which is microbiologically safe, can be obtained by a method including the steps of:

a. providing a fruit-based composition comprising at least 65 wt.%, on a total solids basis, of a fruit material, wherein the composition has a pH between 3.0 and 4.5 and a total solids content between 10 and 30 wt.% by weight of the product, at ambient condition; and

b. subjecting the fruit-based composition to a pressure between 300 MPa and 500 MPa and a temperature between 65 °C and 80 °C, for 2 to 30 minutes.

The method according to the invention allows the preparation of a fruit-containing product that is microbiologically safe even for baby food standards as compared to similar compositions prepared by usual thermal treatment, having extended shelf life at ambient temperatures. Surprisingly, the inventors have found that the method according to the invention is particularly effective to drastically reduce the number of undesired bacterial spores, such as *Alicyclobacillus acidoterrestris.*

Advantageously, unlike thermal treatments in the art, the fruit containing product prepared by the method of the invention presents a more natural appearance (particularly, an improved colour) than similar products prepared by other thermal treatments of the art. The product prepared by the method of the invention thus more closely resembles a homemade fruit based product in terms of organoleptic characteristics if compared to fruit based products sterilized with standard pasteurization.

The invention further relates to a fruit-containing product that is obtainable by the method according to the invention.

DETAILED DESCRIPTION OF THE INVENTION

In a first aspect, the present invention relates to by a method of preparing a fruit-containing product containing less than $10^3$ heat-resistant spores per gram of the fruit-containing product, wherein the method comprises the steps of:

a. providing a fruit-based composition comprising at least 65 wt.%, on a total solids basis, of a fruit material, wherein the composition has a pH between 3.0 and 4.5 and a total solids content between 10 and 30 wt.% by weight of the product, at ambient condition; and

b. subjecting the fruit-based composition to a pressure between 300 MPa and 500 MPa and a temperature between 65 °C and 80°C, for 2 to 30 minutes,

wherein the fruit-containing product is selected from baby foods, fruit purees, fruit spreads, slurries, mousse/mousselines, compotes, creams and jams.

'Fruit-containing product', as used herein, relates to an edible product suitable for human consumption, preferably but not limited to, baby consumption. Examples of fruit-containing products in the context of the invention include 'baby food', fruit purees, fruit spreads, slurries, mousse/mousselines, compotes, creams, jams, and the like. Herein, 'baby food' (interchangeably: 'first diet food') refers to weaning foods having the common meaning in the art as defined, for instance, in the Commission Directive 2006/125/EC. Baby foods are normally used as a supplement to the baby diet (which may be otherwise only comprised of animal milk and/or infant milk formula/growing up formula/young children formula) as infants progress onto a mixed family diet and/or in their progressive adaptation to ordinary food.

'Fruit', in the context of the present invention, has the usual meaning in the art and is thus defined as a product obtained from plants associated with seeds. In the context of the invention, 'fruit material' refers to fruit or a mix of two or more fruits, preferably in the form of pure fruit puree, pure fruit concentrate and/or pure fruit pulp. 'Pure fruit' herein refers to fruits without any additives. Suitable fruits for the preparation of the fruit-containing product according to the method of the invention include, but are not limited to, apples, apricots, bananas, berries, blueberries, cherries, clementines, cress, elderberries, grapes, grapefruit, lemons, mangos, oranges, papaya, peaches, pears (e.g. Williams pear), pineapples, plums, raspberries, rhubarb, sorrel, strawberries, and the like. In the context of the present invention tomatoes are not considered a fruit.

Methods of determining pH and total solids content in the fruit-based composition are usual to the skilled person. For instance, the pH value of the fruit based composition used in the method of the present invention can be determined using e.g. a pH-meter by placing the probe directly in the fruit composition, without dilution in water, at ambient temperature.

As used herein, "total solids" has its usual meaning in the art, e.g., it refers to the carbohydrate and cellulose contents of a fruit based composition, most of which is insoluble. Total solids of the fruit-based composition can be calculated as a sum of total solids provided for each of ingredients of the composition.

As described herein, the term "Brix relative density", "Brix", or "°Bx", refers to a well-known hydrometer scale for measuring the soluble solids content of a liquid as determined by a refractometer calibrated at 20 °C. The Brix scale measures the number of grams of sugar present per 100 grams of aqueous sugar solution (the total solubilized solid content). For example, a measurement of 10 °Bx refers to 10 mg/ml of sugar in solution. For reference, packaged orange juices normally have around 11 °Bx. Soluble solids (°Bx) in the method according to the invention can measured using a refractometer MS REF 090L My-Soft, calibrated at 20 °C.

Water activity ('Aw') is measured by common techniques known in the art. For instance, water activity can be measured using AQUALAB 3TE water activity meter (Decagon Device Inc.).

Herein, 'viscosity' can be determined at 20 °C using e.g. the RM180 Rheomat Mettler Toledo device. By way of comparison, the viscosity values refer to shear rate of 10 sec$^{-1}$, unless otherwise indicated. The measurement system, consisting of a tube, filled with the sample (puree or beverage) is coupled with a rotating bob which is immersed in the bath of an F12 refrigerated/heating circulator (Julabo Labortechnik GmbH, Seelbach, Germany) at 20 °C. The inner cylinder or bob starts rotating from 0 shear and ramps up to higher shear rates. Preferred fruit-containing products prepared by the method of the invention are fruit purees, which are commonly a non-Newtonian fluid, particularly a shear thinning fluid. A non-Newtonian fluid is not viscosity constant but varies depending on the shear rate. That is to say, these fluids deform or flow in accordance with a shear rate, or the rapidity at which pressure, such as a squeezed tube, is applied. In a shear thinning fluid (such as ketchup), fluid viscosity decreases with increasing shear stress.

According to one embodiment, the pH of the fruit based composition is between 3.2 to 4.4, preferably 3.5 to 4.3, most preferably 3.9 to 4.2. The fruit-containing product prepared by the method of the invention also preferably has a pH between 3.0 and 4.5, more preferably 3.2 to 4.4, preferably 3.5 to 4.3, most preferably 3.9 to 4.2, since the pressure-/temperature treatment of the invention does not substantially alter the pH of the fruit based composition.

The method of the invention is particularly effective in reducing heat-resistant spores at the pH range of 3.0 to 4.5, which allows other processing parameters, in particular time and temperature, to be applied in the lower ends of the ranges. Accordingly, if necessary, the pH of the fruit based composition of step (a) may be adjusted to the ranges defined for the present method in case the fruit material provides a pH of below 3.0 or above 4.5. For instance, when the fruit material comprises only or substantially only banana, the pH of the fruit material may be higher than 4.5, thus requiring pH adjustment to the pH values of the present invention. Methods to adjust the pH are known to the person skilled in the art. According to one embodiment, the method comprises the step of adjusting the pH of the fruit material with a pH adjustment component prior to step (a). The pH adjustment component is acceptable in baby food products, and is preferably selected from fruit juice or fruit juice concentrate, more preferably lemon juice or lemon juice concentrate.

In a preferred embodiment, the total solids content of the fruit based composition starting product and/or the product as obtained is between 10.5-28 wt.%, preferably between 11-25 wt.%, more preferably between 15-20 wt.%, by weight of the product. According to one embodiment, the fruit-based composition and/or the fruit-containing product according to the invention comprises more than 70 wt.% of fruit material, on a total solids basis, more preferably more than 75 wt.% of fruit material, even more preferably more than 80 wt.% of fruit material, on a total solids basis.

In a preferred embodiment, the 'fruit material' in step (a) comprises one or more fruits selected from the group comprising apple, pear (e.g. Williams pear), berries, banana, cherry, mango, peach, apricot, pineapple and/or combinations thereof. In one embodiment, the 'fruit material' comprises apple and a second fruit selected from the group comprising pear (e.g. Williams pear), berries, banana, cherry, mango, peach, apricot, pineapple in a fruit weight ratio of 1:1, preferably 1.5:1, more preferably 2:1. In another embodiment, the 'fruit material' comprises banana and a second fruit selected from the group comprising apple, pear (e.g. Williams pear), berries, cherry, mango, peach, apricot, pineapple in a fruit weight ratio of 1:1, preferably 1.5:1, more preferably 2:1.

Preferably, the product prepared by the method of the invention is free of meat, fish, milk protein, egg protein, legumes (i.e., a plant in the Fabaceae family or a fruit or seed thereof) and/or vegetables, particularly free of meat, legumes and/or vegetables. In the context of the present invention, tomato is defined as a vegetable. Accordingly, in a preferred embodiment, the product is free of tomato, eggplant, potato, zucchini, and the like. More preferably, the product is free of tomato.

In a preferred embodiment, the fruit-based composition used in the method according to the invention has a percent soluble solids (°Bx) of at least 12 °Bx, more preferably at least 13 °Bx, even more preferably at least 14 °Bx. In a preferred embodiment, the method according to the invention does not substantially alter the percent soluble solids of the composition undergoing temperature and high pressure treatment. Thus, the product prepared by the method of the invention has substantially the same percent soluble solids as the initial fruit based composition used in step (a).

The fruit material may optionally be a mix of different fruits and or fruits purees that are blended to achieve the desired percent soluble solids (°Brix) and pH. The °Brix influences the perceived sweetness of the finished product and the pH influences the tartness or acidity of the finished product.

Preferably, the fruit based composition is in the form of a fruit puree (i.e., a spoonable fruit-based composition). As defined herein, 'puree' refers to the pulp of a product that has been crushed or homogenized in a substantially smooth and/or creamy condition, without a substantial amount of conglomerated pulp constituents as fragments or pieces. Transformation of fresh fruit(s) into the desired fruit-based composition may be suitably performed by means of various techniques known to the art (e.g., pulping, cooking, pressing). Accordingly, the present method may optionally include a pre-treatment step (prior to step (a)) that includes, but is not limited to, fruit preparation (e.g. washing, peeling off, etc.), blending or mixing, fruit cell fragmenting (e.g., by means of a homogenizer, sonolator, stone mill, high-shear apparatus, emulsifier or any other device capable of breaking or fragmenting intact fruit cells), removal of skins, stems, seeds, peels and the like. Alternatively, pre-blended puree and/or fruit juice concentrates may also be used. In one embodiment, the fruit puree is not a mousse. Mousses are characterized by having air bubbles incorporated in a smooth composition. Fruit purees are distinct from fruit juices, the water activity of which is too high, thereby providing a baroprotective effect when performing the method according to the invention.

Typically, the fruit-containing products according to the invention have a viscosity of 3.5 to 5.5 Pa.s, preferably 3.8 to 5.2 Pa.s, more preferably 4.0 to 5.0 Pa.s, as determined at a shear rate of 10 sec$^{-1}$ at 20 °C, using e.g. a RM 180 Rheomat Mettler Toledo device. The fruit-containing products are typically non-Newtonian, shear thinning fluid. Thus, the viscosity of the product will decrease as the shear rate increases. By means of comparison, when measured at a higher shear rate, the products according to the invention have a viscosity of 0.3 to 1.5 Pa.s, preferably 0.5 to 1.0 Pa.s, as determined at a shear rate of 130 sec$^{-1}$ at 20 °C, using e.g. a RM 180 Rheomat Mettler Toledo device. These viscosities are appropriate for a spoonable and/or squeezable fruit-containing product according to the invention. The fruit-based composition in step (a) is preferably homogenized. After homogenization, the fruit-based composition is subsequently pumped to a suitable food processor wherein step (b) is carried out.

Prior to step (b), the fruit based composition may be stored at refrigerated condition (2-8 °C). Preferably, prior to step (b), temperature of the fruit based composition is brought to about ambient temperature (20-24 °C).

Step (b) is a high pressure processing (HPP). The pressure applied in step (b) is between 300 MPa and 500 MPa, preferably between 330 MPa and 450 MPa.

The temperature applied in step (b) of the method according to the invention is between 65 °C and 80°C, more preferably between 65 °C to 76°C and even more preferably between 65 °C to 74°C. In a further preferred embodiment, the fruit-based composition is not exposed to a temperature that exceeds 85°C, more preferably 80°C, before and/or after step (b) is executed.

In a preferred embodiment, step (b) is carried out for between 3 and 26 minutes, more preferably between 5 and 22 minutes and even more preferably between 7 and 18 minutes, most preferably between 8 and 12 minutes.

After step (b), the fruit-containing product is preferably packaged. Suitable packaging includes but is not limited to glass jars or squeezable tubes. The packaging is preferably sterile. Alternatively, packaging can occur prior to step (b), that is prior to temperature and high pressure treatment.

The present inventors have surprisingly found that the method according to the invention advantageously avoids the need for addition of food preservatives for fruit-containing products that are preferably stored at ambient temperature, while achieving excellent microbiological stability including against bacterial spores commonly found in food products. As used herein, "preservative" is described as an agent that is added to the product in order to enhance microbiological stability, preserve/retain flavour, colour, texture, cell wall structure, appearance, moisture, and the like.

The present method advantageously allows preparing fruit-containing compositions with improved microbiological stability (i.e., reduced bacterial spores) as compared to identical products prepared by usual thermal treatments, regardless of the presence of preservatives in the formulations. In one preferred embodiment, the method of the present invention includes the step of adding an edible antimicrobial preservative to the fruit-based composition before, during or after the step (b), preferably after step (b) is applied. Suitable antimicrobial preservative(s) are food grade, and are selected from sorbic acid, a sorbate (e.g. sodium sorbate), benzoic acid, a benzoate (e.g. hydroxybenzoate or sodium benzoate), parabens, nitrate, nitrite, citric acid, lactic acid, acetic acid, propionic acid, a propionate (e.g. sodium propionate), malic acid, tartaric acid, sulphur dioxide and sulphite. Preferably, the preservative is added at an amount of less than 0.1 wt.% based on total weight, more preferably less than 0.05 wt.%, even more preferably less than 0.03 wt.%.

Fruits may include natural preservatives (e.g., citric acid). However, according to one embodiment, no antimicrobial preservative is added to the fruit-based composition in the method according to the invention, particularly wherein the method is to prepare a baby food fruit containing product. More preferably, no antimicrobial preservative is added after step (b) is applied. Worded differently, in a preferred embodiment, the fruit-containing product according to the invention does not include added preservative(s) *(i.e.,* does not include preservative(s) that is/are added to the composition and/or that is/are not present in the natural fruit ingredient(s) present in the product).

According to one embodiment, the fruit-based composition of step (a) comprises less than 10 wt.% of sugars by weight of the product, preferably less than 5 wt.% of sugar, even more preferably less than 3 wt.% sugar by weight of the product. As defined herein, 'sugars' refer to added sugar that are not naturally present in the fruit material, i.e., in the natural, pure fruit. Thus, 'sugars' as used herein refer to added sugar selected from sucrose, glucose, galactose, saccharose and combinations thereof, more preferably, sucrose. Accordingly, the method according to the invention does not comprise a step of adding sugar to the fruit based composition before, during or after step (b) of applying temperature and high pressure to the fruit based composition.

The composition in step (a) comprises at least 65 wt.%, based on total weight, of fruit material, preferably at least 75 wt.% fruit material, more preferably, at least 85 wt.% fruit material, most preferably at least 90 wt.% fruit material.

Typically, the composition and/or product according to the invention has a water content of up to 35 wt.% water, based on total weight, more preferably up to 25 wt.%, even more preferably up to 15 wt.% water, most preferably up to 10 wt.% water.

In a preferred embodiment, the fruit-containing composition has a water activity (Aw) of at least 0.96, more preferably at least 0.97. Further, it is preferred that the fruit-containing composition does not have a water activity above 0.99. Preferably, the product as obtained has a water activity between 0.95 to 0.99, more preferably between 0.98 and 0.99.

Preferably, the fruit-containing product according to the invention is dairy-free.

In a preferred embodiment, a thickener is present in the fruit-based composition. Preferred thickeners are selected from the group comprising starches, such as starch waxy maize, flours, preferably rice flour, rice, cereals and grains, pasta, and/or crushed/milled biscuits (biscuit flour), and/or gums such as xanthan gum or carrageenan gum. Preferably, thickeners are added in the fruit based composition in the method of the invention in an amount of less than 5 wt.% based on total weight, more preferably less than 3 wt.% based on total weight, even more preferably less than 2 wt.% based on total weight. In one embodiment, the fruit-based composition comprises 2.0 to 3.0 wt.% based on total weight of a thickener, preferably starch such as starch waxy maize. In the context of the invention gelatine is preferably not used as a thickener.

In a preferred embodiment, the method according to the invention includes the step of storing the final fruit containing product at ambient conditions, typically at a temperature in the range of 15 - 25 °C or even 20 - 24 °C. Preferably, the method comprises the step of storing the product at ambient conditions for at least 7 days, more preferably at least 2 months, even more preferably, at least 4 months at ambient conditions. In a most preferred embodiment, the product prepared by the method of the invention has a shelf-life of at least 12 months at ambient storage conditions, or even at least 18 months at ambient storage conditions.

According to yet another aspect of the invention, the method is for reducing microbial spoilage of a fruit-containing product, more specifically for reducing the number of heat resistant-spores in a fruit-containing product. Preferably, the method is for achieving at least a 3 log reduction, preferably at least a 5 log reduction and even more preferably at least a 7 log reduction in heat-resistant spores in the product. In a further preferred embodiment, the method achieves at least a 3 log reduction, preferably at least a 5 log reduction and even more preferably at least a 7 log reduction in heat-resistant spores, such as from *Alicyclobacillus acidoterrestris,* in the product. The method for reducing the number of heat-resistant spores in a fruit-containing product results in a reduction of the number of heat-resistant spores to below $10^3$ spores / g, more preferably to below $10^2$ spores / g or even below 10 spores / g. Most preferably, the amount of heat-resistant spores is below the detection limit.

In a second aspect, the present invention relates to a fruit-containing product obtainable by the method of the present invention.

The fruit-containing product prepared by the method of the invention has an energy density of between 30 and 80 kcal per 100 g, preferably 40-60 kcal/100g product.

The fruit-containing product according to the invention is preferably pourable, spreadable or spoonable, more preferably spoonable, which is ready-to-consume. The fruit-containing product in the context of the invention is selected from 'baby food', fruit purees, fruit spreads, slurries, mousse/mousselines, compotes, creams, jams, and the like. Alternatively, the spreadable fruit product may be used as a food ingredient or flavouring system in producing other products. For example, the product may be used as a substitute for milk or as an enhancement to such products as yogurt, ice cream or other suitable products employing fruit or fruit flavours.

Preferably, the fruit-containing product is shelf stable at ambient conditions for 12-18 months.

The 'fruit-containing product' according to the present invention is preferably intended to be consumed by a human infant, preferably having an age of between 3-36 months, more preferably between 3-24 months and even more preferably between 3-18 months. Thus, the fruit-containing product may also be referred to as a fruit-containing infant food or even a fruit-containing baby food, preferably an infant fruit puree or a baby fruit puree.

The fruit-containing product obtained by the method of the invention contains less than $10^3$ heat-resistant spores per gram or even below $10^2$ spores per gram. Preferably, the fruit-containing product contains less than $10^3$, more preferably less than $10^2$ or even less than 10 spores of *Alicyclobacillus acidoterrestris.* Most preferably, spores of *Alicyclobacillus acidoterrestris* are substantially absent from the fruit-containing product. In a preferred embodiment, the fruit-containing product obtained by the method of the invention comprises at least 65 wt.% of a fruit material based on total weight, a pH of 3.0 to 4.5, an energy density of between 30 and 80 kcal per 100 g, and a viscosity of between 3.5 to 5.5 Pa.s at a shear rate of 10 sec$^{-1}$ at 20 °C.

All other limitations and definitions herein provided for the method according to the invention apply *mutatis mutandis* to the product obtained thereby.

EXAMPLES

**Example 1**

**1.1 Test organisms**

The *Saccharomyces cerevisiae* strain DSM 1333 used in this study was obtained from the German Collection of Microorganisms and Cells Cultures.

The *Alicyclobacillus acidoterrestris* strain DSM 2498 used in this study was obtained from the German Collection of Microorganisms and Cell Cultures. This strain was isolated from apple juice by Cerny *et al.* 1984. A. *acidoterrestris* is a heat-resistant, acidophilic, spore-forming Gram-positive bacterium.

The stock cultures were kept immobilized on sterile beads at - 80°C in a Cryobank.

**1.2 Preparation of suspensions and inoculums of *Saccharomyces cerevisiae***

A twenty-four-hour culture of *S. cerevisiae* DSM 1333 strain grown in YPG-broth (1% yeast extract - Difco, 1% peptone - Difco, 2% glucose - POCh) was centrifuged at 4◦C for 10 min at 5900 x g, and the sedimented cells were aseptically re-suspended into phosphate-buffered saline (PBS, pH 7.2) and again centrifugated. The washing procedure was repeated twice. The model suspensions of S. *cerevisiae* (5.4-8.7 log cfu/mL) were prepared in PBS and dispensed in 2.5 mL portions in sterile plastic cryovials (Simport, Canada), in duplicate. Baby food formula was inoculated with S. *cerevisiae* cells (from the model suspension) to 6 log cfu/ g and transferred into bottles (Bionovo) in 25 g portions, in duplicate.

**1.3 Preparation of suspensions and inocula of *Alicyclobacillus acidoterrestris***

A fresh culture suspension of A. *acidoterrestris* was spread-plated onto 10 potato dextrose agar plates with a pH of 4.0 (Oxoid). The inoculated plates, packed in sealable plastic bags to prevent drying, were incubated at 45◦C for ca. 10 days, until over 90% spores had developed. The degree of sporulation was monitored by microscopy after staining with malachite green. The sporulated agar plates were harvested by flooding with 2.5 mL of sterile, deionized water and scraping with a spreading loop. The spores were washed by centrifugation three times (14,000 rpm for 10 min at 4◦C). Finally, the spore pellets were re-suspended in 5 mL of sterile deionized water and stored at 4◦C until use. The number of spores was evaluated after serial dilutions and subsequent incubation on BAT agar (Merck) for 5 days at 45◦C. Just before the experiments, spores were suspended in baby food formula at approximately 6 log cfu/g.

**1.4 Spoonable baby food/puree**

The baby food formula used in this study (14,5 °Brix, pH 3,7) consisted of the following infant-grade ingredients: apple puree 64%, blueberry puree 20%, Williams pear puree 14%, rice flour 2% and 0.04% vitamin C. Purees as used were manufactured from sources approved for supply of baby-grade food and were free from foreign matter and any additives besides vitamin C (e.g. colourants, aromas, preservatives). The baby food as obtained is a puree or a spoonable composition as typically sold in the supermarkets where it has its own market segment. The water activity (Aw) was measured using AQUALAB 3TE water activity meter (Decagon Device Inc.). Aw of the sample, as measured in triplicate, was 0.987.

### 1.5 Enumeration of viable and injured cells of S. *cerevisiae*

Samples were serially diluted in maximum recovery diluents (Merck), and spread on Sabouraud agar (Merck) and Sabouraud agar with 7% NaCl (POCh). This was the maximum concentration of NaCl that caused no reduction in the colony count of unstressed cells of the S. *cerevisiae* DSM 1333 strain. The plates were incubated at 25∘C for 5 days. The difference between the viable (cfu in Sabouraud agar) and non-injured cells (the corresponding cfu in Sabouraud agar with 7% NaCl) was used to estimate injured survivors as based on Somolinos et al., 2008 [Somolinos M, Garcia D, Pagán R, Mackey B. Appl. Environ. Microbiol. 2008;74:7570-7577].

### 1.6 Determination of surviving *A. acidoterrestris* spores count using the plate method

The number of the surviving population was determined using the plate method on BAT-agar (Merck) through incubation for 5 days at 45 °C. Samples were tested just after the pressure treatment and after storage for the indicated number of days at ambient conditions (22-24°C).

### 1.7 High-Pressure Pasteurization (HPP) process steps

The steps of the HPP procedure were executed using a high-pressure Laboratory-scale Food Processor, Type U4000, Production year 2010, manufactured by the Institute of High-Pressure Physics, Unipress Equipment Division.

The technical parameters that can be adjusted include a maximum pressure of 600 MPa, working temperature of between -10° and 80°C, the sample chamber has a volume of about 1 Litre and a sample space of 65 mm diameter and height of 284 mm. The pressure-transmitting fluid used was distilled water and polypropylene glycol (1:1). Pressure is controlled by a fully automatized multi-cycle pressure process. A pressure of up to 500 MPa was generated in 70-80 s; the release time was 2-4s. Data acquisition allows monitoring and recording of all important process parameters, including pressure in the vessel, temperatures in the vessel and in samples and are disclosed herein.

General sample processing scheme: Twenty-five grams samples in HDPE bottles (Bionovo) were exposed to high pressure treatment with 300, 400, or 500 MPa at temperatures 60 °C, 70 °C and 75 °C for 5, 10 and 15 min, followed by storage of the treated puree at ambient conditions for several weeks or even months during which at selected time points samples were taken for microbiological analysis to determine spoilage of the treated product. The pressurization times as mentioned do not include the time to ramp-up and the release of pressure. The assays were performed using two independent samples from two independently executed experiments. Unpressurized samples were used as controls. After treatment samples were removed from the chamber and stored in ambient condition at 22 - 24°C for further analysis. Online temperature and pressure measurements showed that the process is well controlled and that no overshoot in the temperature of the sample as subjected occurs. For instance, at a temperature setting of 70 °C, a maximum online temperature was measured of 70.5°C.

### 1.8 Viscosity analysis of spoonable baby food/puree

The puree can be scooped from a jar and fed to an infant using a spoon. Determination of dynamic viscosity at 20 °C was conducted using a RM 180 Rheomat Mettler Toledo device using usual protocol for viscosity measurement. Usual protocol for determining viscosity was applied: it includes a measurement system, consisting of a tube, filled with the sample (puree or beverage), coupled with the rotating bob, which is immersed in the bath of an F12 refrigerated/heating circulator (Julabo Labortechnik GmbH, Seelbach, Germany). The temperature applied during measurement was 20 °C. The bob speed was increased taking measurements at different shear rates ($s^{-1}$).

Viscosity of the spoonable baby food/puree as prepared in 1.4, and prepared according to the method of the invention (as described in item 1.7 with the following set-up 70 °C/400 MPa/10 min), and stored at 20 °C for 4 months) was measured. The values of mean viscosity measured on 3 samples each are given below.

| Shear rate ($s^{-1}$) | Viscosity (Pa.s) |
| --- | --- |
| 6.46 | 6.55 |
| 9.90 | 4.68 |

(continued)

| Shear rate (s⁻¹) | Viscosity (Pa.s) |
|---|---|
| 15.2 | 3.39 |
| 23.3 | 2.46 |
| 35.7 | 1.79 |
| 54.9 | 1.31 |
| 84.1 | 0.96 |
| 129.0 | 0.71 |

**1.8 Results**

The inactivation of *S. cerevisiae* DSM 1333 strains after HPP treatment in all types of applied conditions were 5 log and remained at this level during at least nine weeks of refrigerated or ambient storage (after 9 weeks the shelf-life test was terminated). Inactivation of bacterial *A. acidoterrestris* spores was also very effective under a variety of different conditions, resulting in a reduction of about 6 logs.

Table 1: Results from indicated processing parameters indicating the number of surviving A. *acidoterrestris* spores after inoculation of multifruit puree (containing apple, blue berry and Williams pear) with $10^6$ spores per g product after the indicated storage time. A and B indicate independent duplicate samples. Similar results were obtained after storage of samples for 21, 28, 42 and 63 days.

| Storage conditions | All samples were stored for 7 days at ambient conditions | | | | | | | |
|---|---|---|---|---|---|---|---|---|
| Process parameters | Untreated | | 500 MPa/75°C/5' | | 500 MPa/75°C/10' | | 500 MPa/75°C/15' | |
| Sample | A | B | A | B | A | B | A | B |
| Count cfu/g | $2.0\times10^5$ | $3.1\times10^5$ | <10 | 10 | <10 | <10 | <10 | <10 |

Good results were also obtained with testing at 400 MPa, a temperature of 75°C for 5, 10 and 15 minutes. Under these conditions, samples were stored for a period of between 7 and 63 days, giving sufficiently low cfu counts for various of the tested conditions.

Table 2: Results from indicated processing parameters indicating the number of surviving A. *acidoterrestris* spores after inoculation of multifruit puree (containing apple, blue berry and Williams pear) with $10^6$ spores per g product after the indicated storage time. A and B indicate independent duplicate samples. Similar results were obtained in the samples immediately after execution of the high hydrostatic pressure process, as well as for extended storage periods (up to 224 days).

| Storage conditions | All samples were stored for 7 days at ambient conditions (22-24°C). | | | | | | | |
|---|---|---|---|---|---|---|---|---|
| Process parameters | Untreated | | 400 MPa/70°C/5' | | 400 MPa/70°C/10' | | 400 MPa/70°C/15' | |
| Sample | A | B | A | B | A | B | A | B |
| Count cfu/g | $1.4x\ 10^5$ | n.d. | <10 | 10 | <10 | <10 | 30 | <10 |

Good results were also obtained with testing at 500 MPa, a temperature of 70°C for 5, 10 or 15 minutes, where already after 7 days of storage similar low cfu counts (<10 or 10) were recorded. Under these conditions, samples were also stored for up to 63 days giving such low cfu counts.

Table 3: Results from indicated processing parameters indicating the number of surviving A. *acidoterrestris* spores after inoculation of multifruit puree (containing apple, blue berry and Williams pear) with $10^6$ spores per g product after the indicated storage time. A and B indicate independent duplicate samples. Similar results were obtained for samples that had been stored for shorter (e.g. 28 and 28 days) and longer periods (e.g. 63 days).

| Storage conditions | All samples were stored for 42 days at ambient conditions | | | | | | | |
|---|---|---|---|---|---|---|---|---|
| Process parameters | Untreated | | 400 MPa/60°C/5' | | 400 MPa/60°C/10' | | 400 MPa/60°C/15' | |
| Sample | A | B | A | B | A | B | A | B |
| Count cfu/g | $2.7 \times 10^6$ | $3.2 \times 10^6$ | 20 | 20 | - | 10 | <10 | 20 |

Good results were also obtained with testing at 500 MPa, a temperature of 60°C for 5, 10 and 15 minutes. Under these conditions, samples were stored for a period of between 7 and 63 days, giving sufficiently low cfu counts for various of the tested conditions.

### 1.9 Conclusion

The high-pressure pasteurization process as executed according to example 1 allows to obtain a product with an adequate reduction of undesirable heat-resistant spores.

### Example 2

### 2.1 Sensory analysis

To validate the consumers' acceptance, several sensorial attributes of the fruit products obtained using the HPP process were compared with products obtained by conventional retort pasteurization technology. This conventional treatment is currently practiced to ensure products are obtained that can be stored at ambient conditions for prolonged periods of time while remaining safe for consumption by infants. Thus, the same fruit-based formula as manufactured in a factory obtained using conventional thermal treatment for commercial production was used for comparison purposes.

Sensory attributes as tested included colour, appearance, taste, smell and consistency were assessed according to the six-point scale characteristic by certified sensory food panel experts from Institute of Agriculture and Food Biotechnology, Warsaw, Poland (accreditation no AB 452, granted by PCA). Each time no less than seven experts were independently assessed samples. During all stored periods, the HPP-treated products as obtained were given a higher value for all assessed attributes compared to the conventionally processed recipes.

### 2.2 Colorimetric measurements

Colorimetric measurements were performed with the CR-221 Chroma Meter (Minolta, Osaka, Japan) with 45° circumferential illumination and 0° viewing angle geometry measurement, aperture size Ø 3 mm and D65 light source (pulsed xenon lamp). The CIE Lab (CIE L*a*b*) colour scale specified by Commission Internationale de l'Eclairage (CIE) was used. The coordinates in the CIE Lab evaluation system are: L* luminosity (0 for black, 100 for white), a* chromaticity on a green (negative values) to red/ magenta (positive values) axis, and b* chromaticity on a blue (negative values) to yellow (positive values) axis. Colour parameters were measured without pre-treatment such as sample extraction or centrifugation. Before analysis, the instrument was calibrated to a white ceramic tile. Standard plastic cuvettes with 10 mm optical path length were filled with ca. 3 mL of the specimens. The cuvettes were covered with cardboard on three sides, excluding the side facing the measuring head of the chromameter, to provide a black background. Measurements were performed in a room without external light sources. Colour coordinates were recorded four times for each sample to ensure accurate measurement repeatability, and the mean values were calculated. The measurement of the background was performed under identical conditions with the use of a blank cuvette and black background cardboard. Since combined coordinates provide better indication of colour than individual ones, results in colour changes are expressed as ΔE as calculated using the CIE L*a*b* colour space-based calculations according to

$$\Delta E_{12} = \sqrt{(L_1^* - L_2^*) + (a_1^* - a_2^*) + (b_1^* - b_2^*)}$$

wherein L*a*b are determined according to the CIELAB76 standard,
wherein Hue angle h = arc tan (b*/a*),
Chroma C* represents colour saturation, i.e. the proportions in which the colour is mixed with black, white or grey according to

$$C^* = \sqrt{a^{*2} + b^{*2}}$$

and $\Delta E$ is total colour difference.

The higher the delta E ($\Delta E$), the higher the colour difference between the analysed sample (treated) and the reference sample (untreated). Delta E ($\Delta E$) above 2 means visible changes (including to the untrained eye); $\Delta E$ lower than 2 can be visibly detectable by the trained eye.

### 2.3 Colour test results

Total difference of colour ($\Delta E$) was measured in samples prepared as described above in 1.4. The samples were processed by methods according to the invention (using a pressure of 500 MPa and 400 MPa, each for 10 and 15 min, at 70 °C) and same recipe of baby food fruits samples processed by standard thermal technique (pasteurization: 87 °C, 41 minutes). The total difference of colour was assessed in samples immediately after the treatment, as well as during storage both at ambient and at refrigerated temperature (2 to 7 °C) for 14, 28, 42, 56 and 70 days.

Significant differences in total colour (i.e., all $\Delta E > 3.5$) were observed between all samples processed by the method according to the invention as compared to the pasteurized samples immediately after processing and throughout storage up to 70 days (when analysis stopped) at ambient temperature. At refrigerated storage, $\Delta E > 3.5$ was observed up to 28 days and still exhibited visible changes ($\Delta E > 2$) at day 140 of storage.

### 2.4 Conclusion

All tested sensorial attributes for smell, taste, appearance, and consistency (data not shown) and colour were improved over the fruit purees obtained by conventional thermal treatment. The acceptance of the fruit purees by the consumer is considered to be improved for all tested attributes, particularly for the colour measurement.

### Example 3

Orange juice from three different brands were obtained from a local convenience store and tested for reduction of *Alicyclobacillus acidoterrestris* spores according to the procedure mentioned in Example 1 -1.7.

*Samples:*

Hortex orange juice (100% pasteurized concentrate and commercially packed in a 1L bottle, batch number 10.2019 1006QB31 with a carbohydrate content of 10.6 g/100ml of which 10.5 g/100ml are sugars; measured Brix: 11.46 °Bx; viscosity at 841 s$^{-1}$: 0.006 Pa.s);

Cappy orange juice (100% pasteurized concentrate and commercially packed in a 1L bottle, batch number 24.07.2019 L22N00:51WS with a carbohydrate content of 8.9 g/100ml of which 8.9 g/100ml are sugars; measured Brix: 11.15 °Bx); and

Tymbark orange juice (100% pasteurized concentrate to which vitamin C was added, commercially packed in a 1L bottle, batch number 08.2019 L81121LBF with a carbohydrate content of 10 g/100ml of which 10 g/100ml are sugars; measured Brix: 11.04 °Bx; viscosity at 841 s$^{-1}$: 0.006 Pa.s).

The soluble solids (°Bx) were measured by standard technique, using a refractometer (MS REF 090L My-Soft). The water activity (Aw) of the commercial orange juices was measured using AQUALAB 3TE water activity meter (Decagon Device Inc.). Aw of the samples were about 0.991.

Determination of inactivated spores was performed using the BAT-agar spread plate method as described in Ex. 1.

*Results*

Table 4: Results from indicated processing parameters indicating the number of surviving A. *acidoterrestris* spores after inoculation of commercially available orange juice samples with about $10^6$ spores per g product. Samples were tested immediately after the high hydrostatic pressure process was executed. A and B indicate independent duplicate samples. Similar results were obtained for Tymbark orange juice.

| Process parameters | Untreated | | 400 MPa/60°C/10' | | Untreated | | 400 MPa/60°C/10' | |
|---|---|---|---|---|---|---|---|---|
| Sample | Hortex A | Hortex B | Hortex A | Hortex B | Cappy A | Cappy B | Cappy A | Cappy B |
| Count cfu/g | $6.5 \times 10^5$ | $9.4 \times 10^5$ | $1.6 \times 10^3$ | $1.8 \times 10^3$ | $1.1 \times 10^8$ | $1.1 \times 10^8$ | $2.5 \times 10^3$ | $4.3 \times 10^3$ |

## Conclusion

Whereas the method of the invention achieved a log reduction of 5 to 6 for fruit puree samples when tested for surviving spores immediately after the processing was executed (see Ex. 1), under these conditions a mere 2 to 3 log reduction was achieved on orange juice samples. That is, this example confirms the results of Sokolowska et al (Polish Journal of Microbiology 2015, Vol. 64, No 4, 351-359) wherein a maximum log reduction in the amount of germinating heat-resistant *Alicyclobacillus acidoterrestris* spores of up to about 2 logs was achieved. This value is considered to be inadequate and unsafe for the present purpose which is to obtain fruit-based compositions that are intended to be stored at ambient conditions and intended to be ingested by infants or toddlers. It was surprisingly found that similar processing settings applied on a different food matrix provided improved and satisfactory results.

## Statistical analysis

Analysis of variance and Duncan's multiple-range test using StatSoft® Statistica 7.1 were used to test the significance of the differences ($p < 0.05$) between the mean log values of the survival cells after treatment. Microsoft Office Excel 2007 was used for linear and exponential regression of data plotted on survival curves and calculating the coefficient of determination (R2).

## Overall conclusion

The experimental results indicate that the high hydrostatic processing technology is a suitable technique for preserving fruit-based baby food products. Pressurization together with the applied thermal conditions was shown to have a positive effect on quality and safety of infant fruit-based product as well as on sensory attributes which obtained higher valuation compare to the standard processed recipe (after retort pasteurization).

## Claims

1.    A method for preparing a fruit-containing product containing less than $10^3$ heat-resistant spores per gram of the fruit-containing product, wherein the method comprises the steps of:

   a. providing a fruit-based composition comprising at least 65 wt.%, on a total solids basis, of a fruit material, wherein the composition has a pH between 3.0 and 4.5 and a total solids content between 10 and 30 wt.% by weight of the product, at ambient condition; and
   b. subjecting the fruit-based composition to a pressure between 300 MPa and 500 MPa and a temperature between 65°C and 80°C, for 2 to 30 minutes,

   and wherein the fruit-containing product is selected from baby foods, fruit purees, fruit spreads, slurries, mousse/-mousselines, compotes, creams and jams.

2.    The method according to claim 1, wherein the fruit-containing product is a baby food.

3.    The method according to claims 1 or 2, wherein the temperature used in step (b) is between 65-74°C.

4.    The method according to any of the preceding claims, wherein the time period is between 3-26 minutes, more preferably 5-22 minutes and even more preferably between 7-18 minutes.

5.    The method according to any of the preceding claims, wherein the fruit-based composition has a pH between 3.2 and 4.2.

6. The method according to any of the preceding claims, wherein the fruit material is selected from the group comprising apple, pear, berry, banana, cherry, mango, peach, apricot or combinations thereof.

7. The method according to any of the preceding claims, wherein the fruit-based composition has a viscosity of 3.5 to 5.5 Pa.s at a shear rate of 10 sec $^{-1}$ at 20 °C and/or a Brix value of at least 12 °Brix, preferably at least 14 °Brix.

8. The method according any of the preceding claims, wherein the method does not include the step of adding an antimicrobial preservative before or after step (b).

9. The method according to any of the preceding claims, wherein the total solids content of the product is between 10.5-28 wt.%.

10. The method according to any of the preceding claims, wherein the product comprises less than 10 wt.% of sugar by weight of the product, preferably wherein the sugar is sucrose.

11. The method according to any of the preceding claims, wherein the method is for increasing shelf-life of a fruit-containing product at ambient temperature and/or for improving the organoleptic properties of a fruit-containing product stored at ambient temperature.

12. The method according to any of the preceding claims, wherein the fruit-containing product is pourable, spreadable or spoonable.

13. A fruit-containing product obtainable by the method according to any of the preceding claims.

14. A fruit-containing product according to claim 13, the product having a shelf-life of 12 to 18 months when stored at ambient temperature.

15. A fruit-containing product according to claim 13 or 14, wherein the product is a baby fruit puree.


**Patentansprüche**

1. Verfahren zum Herstellen eines fruchthaltigen Produkts, das weniger als 10$^3$ hitzebeständige Sporen pro Gramm des fruchthaltigen Produkts enthält, wobei das Verfahren die folgenden Schritte umfasst:

   a. Bereitstellen einer fruchtbasierten Zusammensetzung, die mindestens 65 Gew.-%, bezogen auf die Gesamtfeststoffe, eines Fruchtmaterials umfasst, wobei die Zusammensetzung einen pH-Wert zwischen 3,0 und 4,5 und einen Gesamtfeststoffgehalt zwischen 10 und 30 Gew.-%, bezogen auf das Gewicht des Produkts, bei Umgebungsbedingungen aufweist; und
   b. Aussetzen der fruchtbasierten Zusammensetzung gegenüber einem Druck zwischen 300 MPa und 500 MPa und einer Temperatur zwischen 65°C und 80°C, für 2 bis 30 Minuten,

   und wobei das fruchthaltige Produkt ausgewählt ist aus Babynahrung, Fruchtpürees, Fruchtaufstrichen, Brei, Mousse/Mousselinen, Kompotten, Cremes und Konfitüren.

2. Verfahren nach Anspruch 1, wobei das fruchthaltige Produkt eine Babynahrung ist.

3. Verfahren nach Anspruch 1 oder 2, wobei die in Schritt (b) verwendete Temperatur zwischen 65 und 74°C liegt.

4. Verfahren nach einem der voranstehenden Ansprüche, wobei die Zeitspanne zwischen 3-26 Minuten, vorzugsweise 5-22 Minuten und noch bevorzugter zwischen 7-18 Minuten liegt.

5. Verfahren nach einem der voranstehenden Ansprüche, wobei die fruchtbasierte Zusammensetzung einen pH-Wert zwischen 3,2 und 4,2 aufweist.

6. Verfahren nach einem der voranstehenden Ansprüche, wobei das Fruchtmaterial ausgewählt ist aus der Gruppe, die Apfel, Birne, Beere, Banane, Kirsche, Mango, Pfirsich, Aprikose oder Kombinationen dieser umfasst.

7. Verfahren nach einem der voranstehenden Ansprüche, wobei die fruchtbasierte Zusammensetzung eine Viskosität von 3,5 bis 5,5 Pa.s bei einer Scherrate von 10 sec$^{-1}$ bei 20 °C und/oder einen Brixwert von mindestens 12 °Brix, vorzugsweise mindestens 14 °Brix, aufweist.

8. Verfahren nach einem der voranstehenden Ansprüche, wobei das Verfahren nicht den Schritt der Zugabe eines antimikrobiellen Konservierungsmittels vor oder nach Schritt (b) umfasst.

9. Verfahren nach einem der voranstehenden Ansprüche, wobei der Gesamtfeststoffgehalt des Produkts zwischen 10,5 und 28 Gew.-% liegt.

10. Verfahren nach einem der voranstehenden Ansprüche, wobei das Produkt weniger als 10 Gew.-% Zucker, bezogen auf das Gewicht des Produkts, umfasst, wobei der Zucker vorzugsweise Saccharose ist.

11. Verfahren nach einem der voranstehenden Ansprüche, wobei das Verfahren zur Verlängerung der Haltbarkeit eines fruchthaltigen Produkts bei Umgebungstemperatur und/oder zur Verbesserung der organoleptischen Eigenschaften eines bei Umgebungstemperatur gelagerten fruchthaltigen Produkts dient.

12. Verfahren nach einem der voranstehenden Ansprüche, wobei das fruchthaltige Produkt gießbar, streichfähig oder löffelbar ist.

13. Fruchthaltiges Produkt, erhältlich durch das Verfahren nach einem der voranstehenden Ansprüche.

14. Fruchthaltiges Produkt nach Anspruch 13, wobei das Produkt bei Lagerung bei Umgebungstemperatur eine Haltbarkeit von 12 bis 18 Monaten aufweist.

15. Fruchthaltiges Produkt nach Anspruch 13 oder 14, wobei das Produkt ein Babyfruchtpüree ist.

**Revendications**

1. Procédé de préparation d'un produit contenant des fruits contenant moins de 10$^3$ spores résistantes à la chaleur par gramme du produit contenant des fruits, dans lequel le procédé comprend les étapes consistant à :

   a. fournir une composition à base de fruits comprenant au moins 65 % en poids, sur la base des matières solides totales, d'une matière fruitière, dans lequel la composition présente un pH compris entre 3,0 et 4,5 et une teneur en matières solides totales comprise entre 10 et 30 % en poids du produit, à l'état ambiant ; et
   b. soumettre la composition à base de fruits à une pression comprise entre 300 MPa et 500 MPa et à une température comprise entre 65°C et 80°C, pendant 2 à 30 minutes,
   et dans lequel le produit contenant des fruits est choisi parmi les aliments pour bébés, les purées de fruits, les pâtes à tartiner de fruits, les bouillies, les mousses/mousselines, les compotes, les crèmes et les confitures.

2. Procédé selon la revendication 1, dans lequel le produit contenant des fruits est un aliment pour bébé.

3. Procédé selon la revendication 1 ou 2, dans lequel la température utilisée à l'étape (b) est comprise entre 65 et 74°C.

4. Procédé selon l'une quelconque des revendications précédentes, dans lequel la période de temps est comprise entre 3 et 26 minutes, de manière plus préférée entre 5 et 22 minutes et de manière encore plus préférée entre 7 et 18 minutes.

5. Procédé selon l'une quelconque des revendications précédentes, dans lequel la composition à base de fruits présente un pH entre 3,2 et 4,2.

6. Procédé selon l'une quelconque des revendications précédentes, dans lequel la matière fruitière est choisie dans le groupe comprenant la pomme, la poire, la baie, la banane, la cerise, la mangue, la pêche, l'abricot ou des combinaisons de ceux-ci.

7. Procédé selon l'une quelconque des revendications précédentes, dans lequel la composition à base de fruits présente une viscosité de 3,5 à 5,5 Pa.s à une vitesse de cisaillement de 10 sec$^{-1}$ à 20°C et/ou une valeur Brix d'au moins 12°Brix, de préférence d'au moins 14°Brix.

8. Procédé selon l'une quelconque des revendications précédentes, dans lequel le procédé n'inclut pas l'étape d'ajout d'un conservateur antimicrobien avant ou après l'étape (b).

9. Procédé selon l'une quelconque des revendications précédentes, dans lequel la teneur en matières solides totales du produit est comprise entre 10,5 et 28 % en poids.

10. Procédé selon l'une quelconque des revendications précédentes, dans lequel le produit comprend moins de 10 % en poids de sucre en poids du produit, de préférence dans lequel le sucre est du saccharose.

11. Procédé selon l'une quelconque des revendications précédentes, dans lequel le procédé est destiné à augmenter la durée de conservation d'un produit contenant des fruits à température ambiante et/ou à améliorer les propriétés organoleptiques d'un produit contenant des fruits stocké à température ambiante.

12. Procédé selon l'une quelconque des revendications précédentes, dans lequel le produit contenant des fruits peut être versé, étalé ou consommé à la cuillère.

13. Produit contenant des fruits pouvant être obtenu par le procédé selon l'une quelconque des revendications précédentes.

14. Produit contenant des fruits selon la revendication 13, le produit présentant une durée de conservation de 12 à 18 mois lorsqu'il est stocké à température ambiante.

15. Produit contenant des fruits selon la revendication 13 ou 14, dans lequel le produit est une purée de fruits pour bébés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MORALES-DE LA PEÑA**. *Food and Bioprocess Technology*, 2018, vol. 11, 1211-1221
- **C. SEVENICH**. High-Pressure Thermal Sterilization: Food Safety and Food Quality of Baby Food Puree. *Journal of Food Science*, 2014, vol. 79 (2)
- **SILVA et al.** Bacterial spore inactivation at 45-65°C using high pressure processing: Study of Alicyclobacillus acidoterrestris in orange juice. *Food microbiology*, 2012, vol. 32, 206-211
- **FERRARI et al.** The effects of high hydrostatic pressure on the polyphenols and anthocyanins in red fruit products. *Procedia Food Science*, 2011, vol. 1, 847-853
- **SOMOLINOS M** ; **GARCIA D** ; **PAGÁN R** ; **MACKEY B.** *Appl. Environ. Microbiol.*, 2008, vol. 74, 7570-7577
- **SOKOLOWSKA et al.** *Polish Journal of Microbiology*, 2015, vol. 64 (4), 351-359